# EUROPÄISCHE PATENTSCHRIFT

(11) **EP 1 267 164 B1**
(45) Veröffentlichungstag und Bekanntmachung des Hinweises auf die Patenterteilung: **01.10.2008**
(21) Anmeldenummer: 01114433.4
(22) Anmeldetag: 15.06.2001
(51) Int. Cl.: G01N 33/483, G01N 1/28, G01N 1/42, C12N 11/14

(54) **Verfahren und Vorrichtung zum Präparieren von Monolayern aus Zellen**
Method and device for the preparation of monolayers from cells
Procédé et dispositif pour la preparation des monocouches cellulaires

(43) Veröffentlichungstag der Anmeldung: 18.12.2002
(73) Patentinhaber: Leica Mikrosysteme GmbH, 1170 Wien (AT)
(72) Erfinder: Horstmann, Heinz, Singapore 118894 (SG)
(74) Vertreter: Schaumburg, Thoenes, Thurn, Landskron

(56) Entgegenhaltungen:
- DE-A- 2 944 464
- DE-C- 3 712 531
- HERNANDEZ-VERDUN D. ET AL: "Cryofixation, *cryosubstitution*, cryo-embedding for visualizing of nuclear ultrastructure and for immunodetection in HeLa cells" BIOLOGY OF THE CELL_(_BIOL. CELL_), 72/1-2 (121-132), XP001017814 France

## Beschreibung

Die Erfindung betrifft ein Verfahren zum Präparieren von Monolayern aus Zellen.

Ferner betrifft die Erfindung eine Vorrichtung zum Präparieren von Monolayern aus Zellen. Im Besonderen betrifft die Erfindung einen Behälter für eine Kryosubstitutionsanlage und einen Einsatz für den Behälter.

Nach einem Verfahren des Standes der Technik (siehe Leica Prospekt von 1993 der Leica Aktiengesellschaft, Wien, Österreich) wird vorgeschlagen in speziellen Durchflusskapseln (Reichert^{™}) eine Kryosubstitution durchzuführen. In denselben Kapseln erfolgt dann ebenfalls die Einbettung der Probe für die Dünnschnittherstellung. Ein Verfahren zur Präparation von Dünnschnitten von zellulären Monolayern wird hier nicht vorgestellt. Ferner kann der im Stand der Technik offenbarte Behälter der Proben zur Kryosubstitution nicht erfolgreich die Kryosubstitution von zellulären Monolayern gewährleisten.

In dem Aufsatz von Hernandez-Verdun D. et al.: "Cryofixation, cryosubstitution, cryo-embedding for visualizing of nuclear ultrastructure and for immunodetection in HeLa cells", Biology of the Cell (Biol Cell), 72/1-2 (121-132), XP-001017814 France wird ein Verfahren zur Herstellung von Dünnschnitten für die mikroskopische Untersuchung von Zellen beschrieben. Dabei werden auf einer Membran Zellen kultiviert. Die die Zellen tragenden Membranen werden in Stücke von 1 mm² Fläche zerschnitten. Anschließend werden die so gewonnenen Proben kryofixiert, durch Kryosubstitution in Azeton dehydriert und schließlich in Kunststoff eingebettet. Das Kunststoffmaterial mit den eingebetteten Proben wird dann geschnitten.

Aus der DE 37 12 531 C ist eine Vorrichtung zum Konstanthalten der Temperatur von biologischen Proben zu deren Kryosubstitution bekannt. Diese Vorrichtung umfasst einen Metallkörper mit Bohrungen zur Aufnahme der Proben. Der Metallkörper befindet sich in einem ersten Behälter aus Polyurethanschaum, an dessen Boden sich flüssiger Stickstoff befindet, mit dem der Metallkörper in Kontakt steht. Der erste Behälter befindet sich in einem zweiten Behälter aus Polyurethanschaum, der festes CO₂ enthält.

Die DE 29 44 464 A1 schließlich beschreibt eine Einrichtung zur Kryosubstitution kleiner biologischer Objekte für mikroskopische, insbesondere elektronenmikroskopische Untersuchungen, mit einem metallischen Behälter zur Aufnahme mindestens eines Objekts, der in einem ein flüssiges Kryogen enthaltenden Dewargefäß angeordnet und durch das Kryogen sowie eine mit dem Behälter verbundene regelbare Heizeinrichtung auf eine gewünschte Temperatur temperierbar ist. Dabei ist der Behälter mit einem Substitutionsmedium gefüllt, über dem Spiegel des Kryogens in dem Dewargefäß angeordnet und durch Umspülen mit kalter Gasatmosphäre auf eine gewünschte Temperatur temperierbar.

Der Erfindung liegt die Aufgabe zugrunde ein Verfahren zu schaffen, mit dem auf einfache Weise zelluläre Monolayer präparierbar sind, und dadurch eine effiziente Dünnschnittherstellung des zellulären Monolayers für eine nachfolgende mikroskopische Untersuchung bereitzustellen.

Die Aufgabe wird durch ein Verfahren gelöst, das die Merkmale des Anspruchs 1 beinhaltet.

Eine weitere Aufgabe der Erfindung ist, es eine Vorrichtung zu schaffen, die es erlaubt zelluläre Monolayer derart zu präparieren, dass eine effiziente Schnittherstellung für eine nachfolgende mikroskopische Untersuchung erzielt werden kann. Ferner soll durch die Vorrichtung eine effiziente Ausnutzung des zellulären Monolayers für die Herstellung der Dünnschnitte gewährleistet sein.

Die Aufgabe wird durch eine Vorrichtung gelöst, die die Merkmale des kennzeichnenden Teil des Patentanspruchs 5 beinhaltet.

Die Erfindung hat den Vorteil, dass mit den erfindungsgemäßen Verfahren eine sichere Probenpräparation von zellulären Monolayern möglich ist. Dazu wird auf einem Saphir Cover Slip (SCS Plättchen) ein zellulärer Monolayer kultiviert. Die Kultivierung erfolgt in einer herkömmlichen Gewebekulturschale. Der sich auf dem SCS Plättchen gebildete zelluläre Monolayer wird aus der Gewebekulturschale entnommen. Anschließend erfolgt ein Abkühlen jeweils eines SCS Plättchen zusammen mit dem zellulären Monolayers derart, dass die Bildung von Eiskristallen in den Zellen des Monolayers vermieden ist. Die abgekühlten SCS Plättchen werden in eine geeignete Vorrichtung eingesetzt, die selbst in eine Kryosubtitutionsanlage (KSA) überführt wird. In der KSA erfolgt die Substitution des zellulären Wassers in den Zellen des Monolayers durch eine geeignetes Medium. Letztlich werden die zellulären Monolayer zusammen mit dem SCS Plättchens derart eingebettet, dass die Zellen des zellulären Monolayers auf den SCS Plättchen von Einbettmaterial umgeben sind, und dass das SCS Plättchen im Wesentlich von Einbettmaterial frei ist.

Das Einbettmaterial wird durch Bestrahlen mit Licht einer geeigneten Wellenlänge ausgehärtet. Der gesamte ausgehärtete Block wird derart abgekühlt, dass ein Absprengen des SCS Plättchens von Einbettmaterial aufgrund mechanischer Spannungen möglich ist.

Besonders vorteilhaft ist es, wenn die Substitution in einer KSA durchgeführt wird, wobei jedes SCS Plättchen mit dem zellulären Monolayer durch einen Einsatz in den Behälter eingebracht ist. Der Behälter selbst wird in die KSA eingesetzt, wobei die SCS Plättchen senkrecht zur Oberfläche des Einsatzes angeordnet sind. Der Einsatz besitzt eine zentrale Öffnung, über die der Behälter in der KSA mit einer Kanüle mit einem entsprechenden Medium befüllt werden kann, um den Austausch des Wassers in den Zellen des zellulären Monolayers durchzuführen. Als geeignete Medium zum Austausch des Wassers in den Zellen des zellulären Monolayers hat sich z.B. Methanol oder Azeton erwiesen. Zusätze von Uranylacetat (UA) oder OsO₄ dienen zur Kontrastierung und Fixierung der Zellen.

Besonders vorteilhaft für das Verfahren erweist sich die Vorrichtung zum Präparieren von Monolayern aus Zellen, die einen Behälter für die KSA umfasst wobei der Behälter selbst mit einem Einsatz versehen ist. Der Einsatz besitzt eine Vielzahl von Ausnehmungen, wobei in jede der Ausnehmung ein SCS Plättchen zusammen mit einem zellulären Monolayer einsetzbar ist, derart dass das SCS Plättchen senkrecht zur Oberfläche des Einsatzes angeordnet ist.

Weitere vorteilhafte Ausgestaltungen der Vorrichtung können den Unteransprüchen entnommen werden.

In der Zeichnung ist der Erfindungsgegenstand schematisch dargestellt und wird anhand der Figuren nachfolgend beschrieben. Dabei zeigen:
- Fig. 1: eine perspektivische Ansicht des Einsatzes zur Halterung der SCS Plättchen während der Substitution,
- Fig. 2: in Detailansicht die Ausgestaltung des Einsatzes zur Halterung der SCS-Plättchen,
- Fig. 3: einen Querschnitt durch den Behälter zur Aufnahme des Einsatzes mit SCS Plättchen.
- Fig. 4: ein Ausführungsbeispiel einer Einbettform,

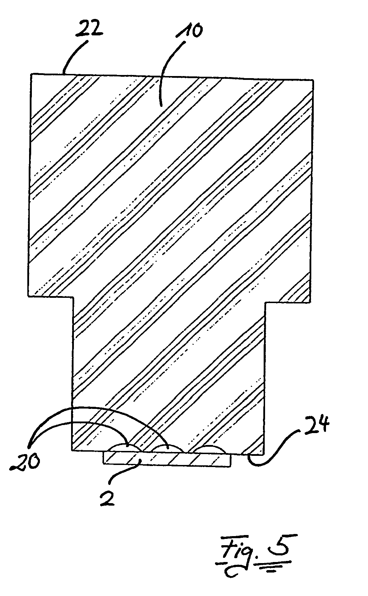

- Fig. 5: eine schematische Darstellung nachdem die Einbettform vom Einbettmaterial entfernt worden ist,
- Fig. 6: eine schematische Darstellung des Verfahrens zur Präparation von zellulären Monolayern

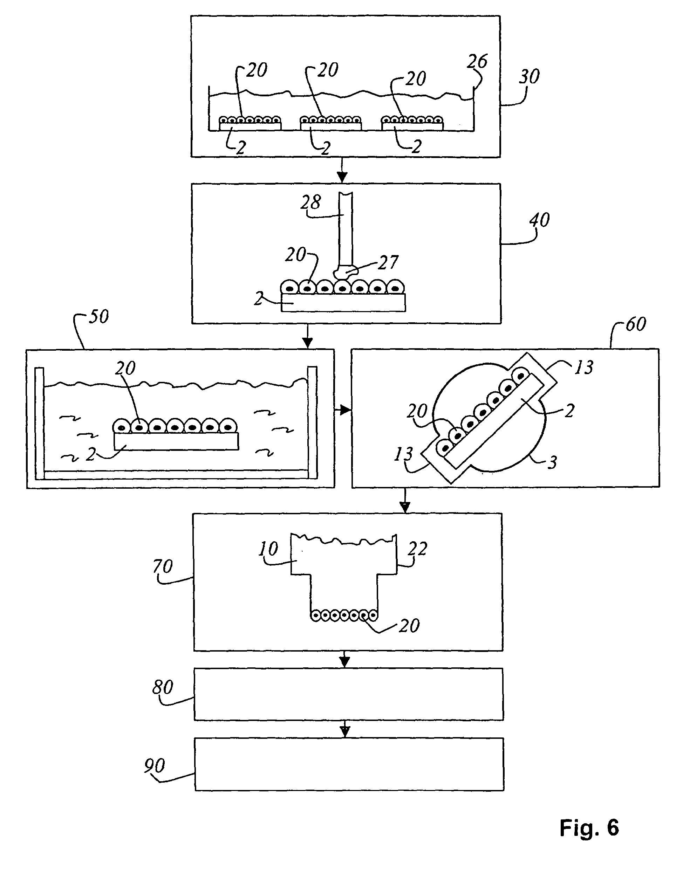

Die Monolayer von Zellen befinden sich bereits auf einem Saphir-Cover Slip Plättchen (SCS Plättchen) Das Präparationsverfahren der Monolayer aus Zellen ist in der Beschreibung zu Fig. 6 offenbart. Ohne die Proben über-100°C zu erwärmen, werden diese in eine Kryosubstitutionsanlage (KSA) transferiert. Die KSA ist nicht dargestellt, da sie jedem Fachmann hinlänglich bekannt ist.

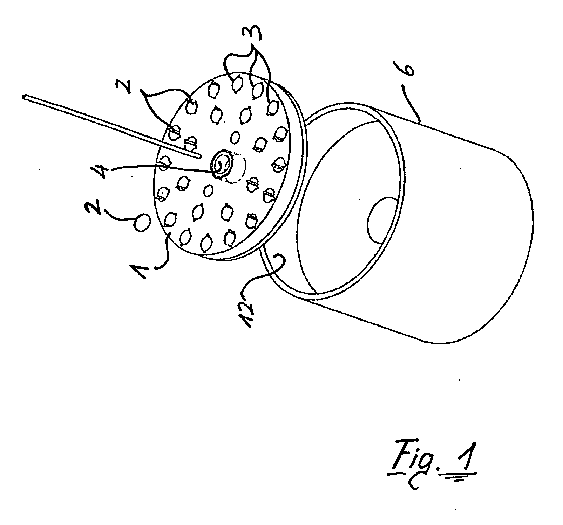

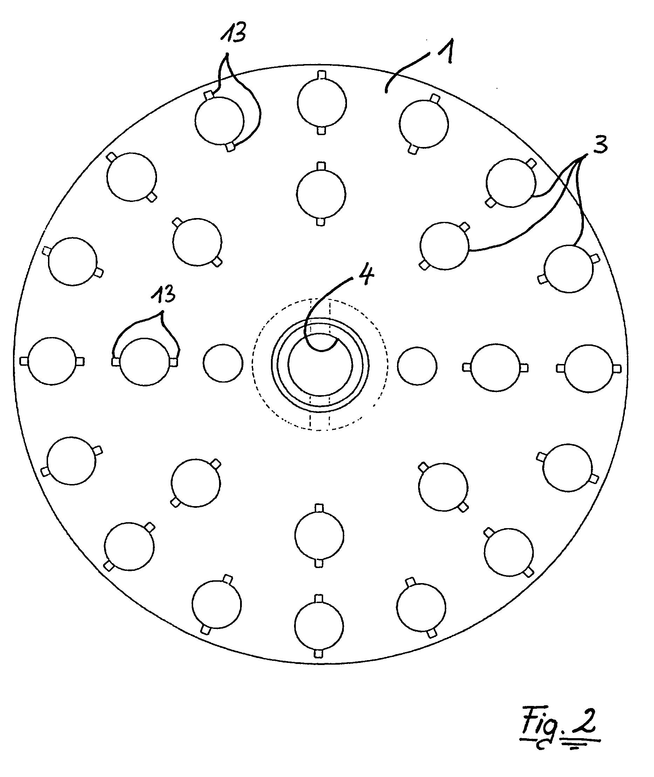

In Fig. 1 ist ein Einsatz 1 dargestellt, der zur Halterung der SCS Plättchen 2 in der KSA dient. Der Einsatz 1 besitzt eine Vielzahl von Ausnehmungen 3, die derart gestaltet sind, daß die SCS Plättchen 2 senkrecht eingesteckt werden können (genauere Darstellung siehe hierzu Fig.2). Die SCS Plättchen 2 zusammen mit dem zellulären Monolayer 20 sind im Einsatz 1 senkrecht zu dessen Oberfläche 1a angeordnet. Ein Behälter 6 ist zur Aufnahme des Einsatzes 1 vorgesehen. Der Behälter 6 ist in thermischem Kontakt mit der KSA. Der Einsatz 1 ist kreisförmig ausgestaltet und passt in eine ebenso kreisförmige Aufnahme 12, die am Behälter 6 ausgebildet ist. Eine zentrale Öffnung 4 ist im Einsatz 1 ausgebildet, über die zentral dem Behälter 6 ein Medium zuführbar ist. Dabei wird der Behälter 6 mittels einer Kanüle 5 soweit mit Medium gefüllt, dass die SCS Plättchen 2 eintauchen. Ebenso kann ein Austausch der Medien über diese Öffnung 4 erfolgen. Der Behälter 6 hat guten thermischen Kontakt zur temperaturgesteuerten Oberfläche der KSA, so dass vorgewählte Temperaturverläufe auch im Medium, das sich im Behälter 6 befindet, erreichbar sind.

Fig. 2 zeigt in Detailansicht die Ausgestaltung des Einsatzes 1 zur Halterung der SCS-Plättchen 2. Die Ausnehmungen 3 im Einsatz 1 sind in diesem Ausführungsbeispiel kreisförmig ausgestaltet. Dies ist nicht als Beschränkung aufzufassen. Am Umfang einer kreisförmigen Ausnehmung 3 sind gegenüberliegende Kerben 13 ausgebildet, die letztlich zur Aufnahme und Halterung der SCS-Plättchen 2 dienen. Die Ausnehmungen 3 sind um die zentrale Öffnung 4 angeordnet.

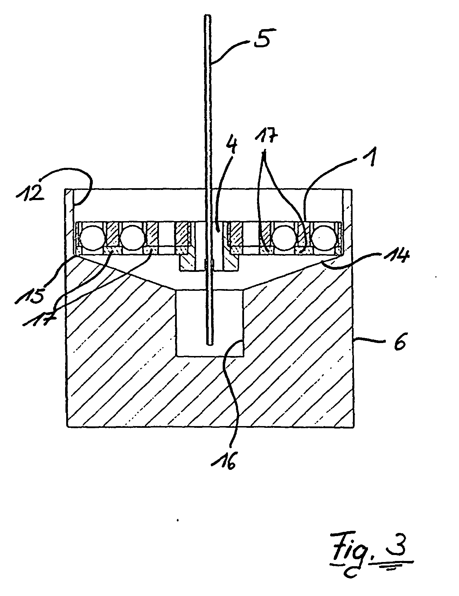

Fig. 3 zeigt im Querschnitt den Behälter 6, in den der Einsatz 1 mit SCS Plättchen 2 eingesetzt ist. Der Behälter 6 besteht aus einem massiven, gut wärmeleitenden Block. In dem Behälter ist die kreisförmige Aufnahme 12 ausgebildet, an die sich eine konische Verjüngung 14 anschließt. Die konische Verjüngung 14 ist derart gestaltet, dass sie einen Anschlag 15 für den Einsatz 1 darstellt. Eine zentrale topfartige Ausformung 16 schließt sich an die konische Verjüngung 14 an. Bei eingesetztem Einsatz 1 ist dessen zentrale Öffnung 4 über der topfartigen Ausformung 16 angeordnet. Wie in Fig. 3 dargestellt ist, kann die Kanüle 5 durch die zentrale Öffnung 4 geführt werden und endet in der zentralen topfartigen Ausformung 16. Der Einsatz 1 besitzt an jeder Ausnehmung 3 mindesten einen Anschlag 17, der bei eingesetztem Einsatz 1 ein Herausfallen der SCS Plättchen 2 in Richtung der zentralen topfartigen Ausformung 16 verhindert.

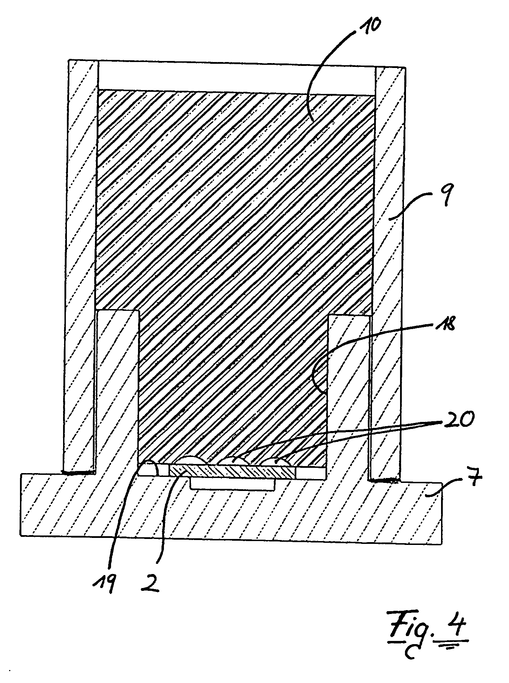

Nach Abschluß der Behandlung der zellulären Monolayer auf den SCS Plättchen 2 wird vorzugsweise eine Tieftemperatureinbettung angeschlossen. In Fig. 4 ist eine Einbettform schematisch in Teilansicht dargestellt, wobei als Einbettform handelsübliche Eppendorf Behälter Verwendung finden. Der Deckel 7 des Eppendorf Behälters weist eine Ausnehmung 18 auf, in die ein SCS Plättchen 2 derart eingelegt ist, dass der auf dem SCS Plättchen 2 befindliche zelluläre Monolayer 20 vom Boden 19 des Deckels abgewandt ist. Auf den Deckel 7 kann ein abgeschnittenes Ende 9 des Eppendorf Behälters gesetzt werden. Dadurch erhält man genügend Raum über dem zellulären Monolayer 20, um hier vorgekühltes Einbettmedium 10 einzufüllen. Die Polymerisation des Einbettmediums 10 findet unter UV Bestrahlung statt. Nach Aushärtung des Einbettmediums 10 wird auf Raumtemperatur erwärmt. Nach Abnahme des Deckels 7 wird der ausgehärtete Block 22 aus dem abgeschnittenen Ende 9 des Eppendorf Behälters gedrückt. Am Ende 24 des Blocks 22 befindet sich der zelluläre Monolayer 20, der noch von dem SCS Plättchen 2 abgedeckt ist. Im nächsten Prozeßschritt wird das SCS Plättchen 2 von dem Ende 24 abgesprengt. Dies erreicht man durch kurzes Eintauchen in flüssigen Stickstoff und bedingt durch die aufgebauten mechanischen Spannungen lässt sich das SCS Plättchen 2 besonders leicht lösen. Der zelluläre Monolayer 20 verbleibt jedoch im Einbettmedium 10 an dem gewünschten Ende 24. Die Schnittherstellung für Untersuchungen des zellulären Monolayers 20 im Elektronenmikroskop ist Stand der Technik.

Fig. 6 stellt schematisch das Verfahren zur Präparation eines zellulären Monolayers 20 dar. In einer herkömmlichen Gewebekulturschale 26 erfolgt das Kultivieren 30 der Monolayer 20 von Zellen auf SCS Plättchen 2. Für eine anschließende Untersuchung muss der Monolayer 20 von Zellen oder zumindest ein Teil davon aus der Gewebekulturschale 26 entnommen werden. Hierzu wurde bereits vor der Herstellung des Monolayers 20 aus Zellen mindestens ein SCS Plättchen 2 in die Gewebekulturschale 26 gebracht. Zu Beginn wird eine gewisse Anzahl der SCS Plättchen 2 in die Gewebekulturschale 26 gelegt. Dabei ist darauf zu achten, dass die SCS Plättchen 2 sorgfältig gereinigt und sterilisiert sind. Anschließend werden die Gewebekulturen und eine entsprechende Nährflüssigkeit in die Gewebekulturschale 26 gebracht. Dabei ist es besonders wichtig zu prüfen, dass die SCS Plättchen 2 in der Nährflüssigkeit nicht zu schwimmen beginnen. Die Suspension der Gewebekulturen setzt sich in der Nährflüssigkeit auf den SCS Plättchen 2 ab. Mit einem Lichtmikroskop (nicht dargestellt) wird das Wachstum des zellulären Monolayers 20 auf den SCS Plättchen 2 kontrolliert. Bei einer 70 bis 80%igen Bedeckung des SCS Plättchens 2 kann das SCS Plättchen 2 zusammen mit dem zellulären Monolayer 20 auch der Gewebekulturschale 26 entnommen werden. Die Entnahme der SCS Plättchens 2 erfolgt mit einer Pinzette und die Trocknung wird mit Filterpapier durchgeführt.

Eine Mikropipettenspitze 28, oder ein anderer spitzer Gegenstand mit geringer thermischer Leitfähigkeit, wird mit Fett 27 (z. B. Vaseline) versehen. Die Aufnahme 40 des SCS Plättchens 2 vom Filterpapier erfolgt durch das Fett. Im Zentrum des SCS Plättchens 2 auf der Zellschicht wird das SCS Plättchen 2 mit dem Fett 27 an der Mikropipettenspitze 28 berührt und bleibt haften. Das SCS Plättchen 2 wird zu dem Schritt des Einfrierens 50 überführt. Zum Einfrieren 50 wird wie bekannt, flüssiges Äthan verwendet. Äthan hat als Flüssigkeit nahe am Schmelzpunkt von etwa -183°C die Eigenschaft, Wärme rasch aus dem eingetauchten SCS Plättchen 2 entziehen zu können. Hohe Abkühlraten sind notwendig, um Eiskristallbildung in wasserhaltigen Proben, wie den zellulären Monolayern 20, möglichst gering zu halten. In dieser Anwendung wird das SCS Plättchen 2 parallel zur Flüssigkeitsoberfläche 34 des Äthans eingetaucht, wobei der zelluläre Monolayer 20 vom Äthan abgewandt ist. Das hat den Vorteil, dass der zelluläre Monolayer 20 beim Eintauchen des SCS Plättchens 2 geschützt ist. Die Reduzierung der Abkühlrate ist sehr gering, da Saphir gute Wärmeleitfähigkeit besitzt. Die SCS Plättchen 2 senkrecht zur Oberfläche des Kühlmediums einzutauchen, führt bei Proben mit guter Wärmeleitfähigkeit zu schlechten Ergebnissen, da bei der ersten Berührung mit dem Kühlmedium noch nicht eingetauchte Teile des SCS Plättchens 2 bereits vorgekühlt werden.

Die gekühlten SCS Plättchens 2 werden ohne sie dabei auf über-100°C zu erwärmen in die KSA überführt. Jedes SCS Plättchens 2 wird in eine Ausnehmung 3 des Einsatzes senkrecht eingeführt. Anschließend werden der Einsatz 1 und der Behälter 6 zusammengeführt und in die KSA zur weiteren Behandlung der zellulären Monolayer 20 auf den SCS Plättchen 2 eingebracht. Beim Austausch 60 des Wassers in den Zellen des zellulären Monolayers 20 werden, wie bereits bei Fig. 1 beschrieben, dem Behälter 6 verschiedene Medien zugeführt, die gegen das Wasser in den Zellen des zellulären Monolayers 20 ausgetauscht werden.

Nach Abschluß des Austausches 60 erfolgt die Tieftemperatureinbettung, von der der Benutzer einen ausgehärteten Block 22 erhält, an dessen Ende 24 sich der zelluläre Monolayer 20 befindet. Das Aushärten 70 erfolgt mit UV-Licht. Als nächstes kann dann mit der Dünnschnittherstellung 80 des zellulären Monolayers 20 begonnen werden. Da der zelluläre Monolayer 20 direkt am Ende angeordnet ist, erhält man beim Schneiden sofort verwertbare Dünnschnitte für eine anschließende elektronenmikroskopische Untersuchung 90. Die beschriebene Präparationsmethode erlaubt es, dass man sofort zu Beginn der Dünnschnittherstellung 80 verwertbare Dünnschnitte für eine mikroskopische Untersuchung 90 erhält.

In den nachfolgenden Tabellen werden Ausführungsbeispiele für die Präparation der zellulären Monolayer 20 dargestellt. Zusätze von Uranylacetat (UA), OsO4 und Glutaraldehyd (GA) dienen der Stabilisierung und Kontrastierung der Zellen und können dem Substitutionsmedium (Methanol oder Aceton) beigefügt werden.
A) Austausch des Wassers in den Zellen des zellulären Monolayers durch Methanol mit 0,5Vol% Uranylacetat (UA).

| Prozessschritt | Reagenz | Zeit (in min.) | Temperatur (°C) | Steigung |
|---|---|---|---|---|
| Substitutionsbeginn | Methanol mit 0,5 Vol% UA | 12 | -85 | |
| Ändern der Temperatur | | 9 | auf -40 | +5 |
| Temperatur Gleichgewicht | | 30 | -40 | |
| Austausch | Eine Mischung aus 3 Teilen und 1 Teil für 60 min eine Mischung aus 2 Teilen und 1 Teil für 60 min eine Mischung aus 1 Teil und 1 Teil für 60 min | 180 | -40 | |
| Einbettmittel zuführen | Lowicryl HM20 | 4 | -40 | |
| Aushärten | Bestrahlen des Lowicrys HM20 mit UV-Licht | 36 | -40 | |

B) Austausch des Wassers in den Zellen des zellulären Monolayers durch Azeton mit 0,5Vol% Uranylacetat (UA), 2Vol% OsO₄ und 0,25Vol% Ga.

| Prozessschritt | Reagenz | Zeit (in min.) | Temperatur (°C) | Steigung |
|---|---|---|---|---|
| Substitutionsbeginn | Azeton mit 0.5Vol% UA, 2Vol% OsO₄ und 0,25Vol% Ga | 12 | -90 | |
| Ändern der Temperatur | | 6 | Auf -60 | +5 |
| Temperatur Gleichgewicht | | 2 | -60 | |
| Ändern der Temperatur | | 2 | Auf -20 | +20 |
| Temperatur Gleichgewicht | | 2 | -20 | |
| Einbettmittel zuführen | Epon 812, Spurrs und Araldite | 30 | +4 | |

C) Austausch des Wassers in den Zellen des zellulären Monolayers durch Azeton mit 0,5Vol% Uranylacetat (UA) und 2Vol% OsO₄.

| Prozessschritt | Reagenz | Zeit (in min.) | Temperatur (°C) | Steigung |
|---|---|---|---|---|
| Substitutionsbeginn | Azeton mit 0,5Vol% UA und 2Vol% OsO₄ | 12 | -90 | |
| Ändern der Temperatur | | 6 | auf -60 | +5 |
| Temperatur Gleichgewicht | | 2 | -60 | |
| Ändern der Temperatur | | 2 | auf -20 | +20 |
| Temperatur Gleichgewicht | | 2 | -20 | |
| Einbettmittel zuführen | Epon 812, Spurrs und Araldite | 30 | +4 | |

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Einsatz
- 1a: Oberfläche
- 2: SCS Plättchen
- 3: Ausnehmung
- 4: Öffnung
- 5: Kanüle
- 6: Behälter
- 7: Deckel
- 9: abgeschnittenes Ende
- 10: Einbettmedium
- 12: kreisförmige Aufnahme
- 13: Kerben
- 14: konische Verjüngung
- 15: Anschlag
- 16: topfartige Ausformung
- 17: Anschlag
- 18: Ausnehmung
- 19: Boden
- 20: zelluläre Monolayer
- 22: ausgehärteter Block
- 24: Ende des ausgehärteten Blocks
- 26: Gewebekulturschale
- 27: Fett
- 28: Mikropipettenspitze
- 30: Kultivieren
- 34: Flüssigkeitsoberfläche
- 40: Aufnahme
- 50: Einfrieren
- 60: Austausch
- 70: Aushärten
- 80: Dünnschnittherstellung
- 90: mikroskopische Untersuchung

## Patentansprüche

1. Verfahren zum Präparieren von Monolayern aus Zellen, umfassend die folgenden Schritte:
- Kultivieren (30) eines zellulären Monolayers (20) auf mindestens einem SCS-Plättchen (sapphire cover slip) (2),
- Abkühlen (50) jeweils eines SCS-Plättchens (2) zusammen mit dem zellulären Monolayer (20) derart, dass die Bildung von Eiskristallen in den Zellen des Monolayers (20) vermieden ist,
- Austausch (60) des zellulären Wassers in den Zellen des Monolayers (20),
- Einbettendes zellulären Monolayers (20) zusammen mit dem SCS-Plättchen (2) derart, dass die Zellen des zellulären Monolayers (20) auf den SCS Plättchen (2) von Einbettmaterial umgeben sind, und dass das SCS-Plättchen(82) im Wesentlichen von Einbettmaterial frei ist,
- Aushärten des Einbettmaterials durch Bestrahlen mit Licht einer geeigneten Wellenlänge,
- Abkühlen des ausgehärteten Einbettmaterials zusammen mit dem eingebetteten zellulären Monolayer (20) auf dem SCS-Plättchen, und
- Absprengen des SCS-Plättchens (2) von dem Einbettmaterial.

2. Verfahren nach Anspruch 1, **dadurch gekennzeichnet**, das die Substitution in einer Kryosubstitutionsanlage durchgeführt wird, dass die SCS-Plättchen (2) mit den zellulären Monolayern durch einen Einsatz (1) ein einen Behälter eingebracht werden und dass der Behälter in die Kryosubstitutionsanlage eingesetzt wird, wobei die SCS-Plättchen (2) senkrecht zur Oberfläche (1a) des Einsatzes (1) angeordnet sind.

3. Verfahren nach Anspruch 2, **dadurch gekennzeichnet, dass** der Einsatz eine zentrale Öffnung (4) aufweist, über die der Behälter (6) in der Kryosubstitutionsanlage über eine Kanüle (5) mit einem entsprechenden Medium befüllt werden kann, um den Austausch (60) des Wassers in den Zellen des zellulären Monolayers (20) durchzuführen.

4. Verfahren nach Anspruch 3, **dadurch gekennzeichnet, dass** der Austausch des Wassers in den Zellen des zellulären Monolayers (20) durch Methanol oder durch Azeton durchgeführt wird.

5. Vorrichtung zum Präparieren von Monolayern aus Zellen, mit einem Behälter (6) für eine Kryosubstitutionsanlage und einem Einsatz (1) für den Behälter, **dadurch gekennzeichnet, dass** der Einsatz (1) eine Oberfläche (1a) mit einer Vielzahl von Ausnehmungen (3) aufweist, wobei in jede der Ausnehmungen (3) ein SCS Plättchen (2) zusammen mit einem zellulären Monolayer (20) einsetzbar ist, derart dass das SCS Plättchen (2) senkrecht zur Oberfläche (1a) des Einsatzes (1) angeordnet ist.

6. Vorrichtung nach Anspruch 5, **dadurch gekennzeichnet, dass** der Einsatz (1) eine zentrale Öffnung (4) aufweist, durch die bei in den Behälter (6) eingesetztem Einsatz (1) der Behälter mit einem Medium befüllbar ist.

7. Vorrichtung nach Anspruch 5, **dadurch gekennzeichnet, dass** die Ausnehmungen (3) kreisförmig ausgestaltet sind, und dass am Umfang einer kreisförmigen Ausnehmung (3) gegenüberliegende Kerben (13) ausgebildet sind, in die das eingesetzte SCS-Plätzchen (2) eingreift.

8. Vorrichtung nach Anspruch 5, **dadurch gekennzeichnet, dass** jede der Ausnehmungen (3) mit mindestens einem Anschlag (17) versehen ist, die das SCS Plättchen (2) gegen ein Durchfallen durch die Ausnehmung (3) sichert.

9. Vorrichtung nach Anspruch 5, **dadurch gekennzeichnet, dass** der Behälter (6) eine kreisförmige Aufnahme (12) hat, und dass der Einsatz (1) in die kreisförmige Aufnahme derart einsetzbar ist, dass die zentrale Öffnung (4) des Einsatzes (1) über einer topfartigen Ausformung (16) angeordnet ist

## Claims

1. Method for preparing monolayers of cells, comprising the following steps:
- cultivating (30) a cellular monolayer (20) on at least one sapphire cover slip (2),
- cooling (50) a respective sapphire cover slip (2) together with the cellular monolayer (20) in such a way that the formation of ice crystals in the cells of the monolayer (20) is avoided,
- exchanging (60) the cellular water in the cells of the monolayer (20),
- embedding the cellular monolayer (20) together with the sapphire cover slip (2) in such a way that the cells of the cellular monolayer (20) on the sapphire cover slip (2) are surrounded by embedding material, and that the sapphire cover slip (2) is essentially free of embedding material,
- hardening the embedding material by irradiating with light of a suitable wavelength,
- cooling the hardened embedding material together with the embedded cellular monolayer (20) on the sapphire cover slip, and
- popping the sapphire cover slip (2) off the embedding material.

2. Method as claimed in claim 1, **characterised in that** the substitution is carried out in a cryosubstitution apparatus, that the sapphire cover slips (2) with the cellular monolayers are introduced into a vessel via an insert (1) and that the vessel is inserted into the cryosubstitution apparatus, wherein the sapphire cover slips (2) are disposed perpendicular to the surface (1a) of the insert (1).

3. Method as claimed in claim 2, **characterised in that** the insert has a central orifice (4) by means of which the vessel (6) in the cryosubstitution apparatus can be filled with an appropriate medium via a cannula (5) in order to effect the exchange (60) of the water in the cells of the cellular monolayer (20).

4. Method as claimed in claim 3, **characterised in that** the exchange of the water in the cells of the cellular monolayer (20) is effected using methanol or using acetone.

5. Device for preparing monolayers of cells, having a vessel (6) for a cryosubstitution apparatus and an insert (1) for the vessel, **characterised in that** the insert (1) has a surface (1a) with a plurality of apertures (3), wherein a sapphire cover slip (2) together with a cellular monolayer (20) can be inserted into each of the apertures (3) in such a way that the sapphire cover slip (2) is disposed perpendicular to the surface (1a) of the insert (1).

6. Device as claimed in claim 5, **characterised in that** the insert (1) has a central orifice (4) through which the vessel can be filled with a medium when the insert (1) is inserted in the vessel (6).

7. Device as claimed in claim 5, **characterised in that** the apertures (3) are circular and that at the periphery of a circular aperture (3) opposing notches (13) are formed into which the inserted sapphire cover slip (2) engages.

8. Device as claimed in claim 5, **characterised in that** each of the apertures (3) is provided with at least one stop (17) which secures the sapphire cover slip (2) against falling through the aperture (3).

9. Device as claimed in claim 5, **characterised in that** the vessel (6) has a circular receiver (12) and that the insert (1) can be inserted into the circular receiver in such a way that the central orifice (4) of the insert (1) is disposed above a pot-like formation (16).

## Revendications

1. Procédé de préparation de monocouches de cellules, ledit procédé comportant les étapes consistant à :
- cultiver (30) une monocouche cellulaire (20) sur au moins une plaquette de SCS (Sapphire Cover Slip ou lamelle de saphir) (2),
- refroidir (50) à chaque fois une plaquette de SCS (2) conjointement avec la monocouche cellulaire (20) de façon à éviter la formation de cristaux de glace dans les cellules de la monocouche (20),
- remplacer (60) l'eau cellulaire dans les cellules de la monocouche (20),
- enrober la monocouche cellulaire (20) conjointement avec la plaquette de SCS (2) de façon à ce que les cellules de la monocouche cellulaire (20) sur la plaquette de SCS (2) soient entourées de matériau d'enrobage et à ce que la plaquette de SCS (2) soit sensiblement dépourvue de matériau d'enrobage,
- faire durcir le matériau d'enrobage en l'irradiant avec de la lumière à une longueur d'onde appropriée,
- refroidir le matériau d'enrobage durci conjointement avec la monocouche cellulaire enrobée (20) sur la plaquette de SCS, et
- séparer la plaquette de SCS (2) du matériau d'enrobage.

2. Procédé selon la revendication 1, **caractérisée en ce que** la substitution est réalisée dans une installation de cryosubstitution, les plaquettes de SCS (2) dotées des monocouches cellulaires sont introduites dans un récipient à l'aide d'un élément d'insertion (1) et le récipient est inséré dans l'installation de cryosubstitution, les plaquettes de SCS (2) étant disposées perpendiculairement à la surface (1a) de l'élément d'insertion (1).

3. Procédé selon la revendication 2, **caractérisé en ce que** l'élément d'insertion comporte une ouverture centrale (4) qui permet de remplir le récipient (6) se trouvant dans l'installation de cryosubstitution avec un milieu correspondant, au moyen d'une canule (5), afin d'effectuer le remplacement (60) de l'eau se trouvant dans les cellules de la monocouche cellulaire (20).

4. Procédé selon la revendication 3, **caractérisé en ce que** le remplacement de l'eau se trouvant dans les cellules de la monocouche cellulaire (20) est réalisé à l'aide de méthanol ou d'acétone.

5. Dispositif de préparation de monocouches de cellules, le dispositif comportant un récipient (6) destiné à une installation de cryosubstitution et un élément d'insertion (1) destiné au récipient, **caractérisé en ce que** l'élément d'insertion (1) présente une surface (1a) qui comporte un grand nombre de creux (3), une plaquette de SCS (2) pouvant être insérée conjointement avec une monocouche cellulaire (20) dans chacun des creux (3) de sorte que la plaquette de SCS (2) soit disposée perpendiculairement à la surface (1a) de l'élément d'insertion (1).

6. Dispositif selon la revendication 5, **caractérisé en ce que** l'élément d'insertion (1) comporte une ouverture centrale (4) qui permet de remplir le récipient avec un fluide lorsque l'élément d'insertion (1) a été inséré dans le récipient (6).

7. Dispositif selon la revendication 5, **caractérisé en ce que** les creux (3) ont une conformation circulaire, et **en ce que** des encoches opposées (13), dans lesquelles s'engage la plaquette de SCS insérée (2), sont ménagées à la périphérie d'un creux circulaire (3).

8. Dispositif selon la revendication 5, **caractérisé en ce que** chacun des creux (3) est doté d'au moins une butée (17) qui immobilise la plaquette de SCS (2) pour l'empêcher de passer par le creux (3).

9. Dispositif selon la revendication 5, **caractérisé en ce que** le récipient (6) comporte un logement circulaire (12), et **en ce que** l'élément d'insertion (1) peut être inséré dans le logement circulaire de façon à ce que l'ouverture centrale (4) de l'élément d'insertion (1) soit disposée au-dessus d'un évidement (16) en forme de pot.
